# EUROPEAN PATENT SPECIFICATION

(11) **EP 2 800 001 B1**
(45) Date of publication and mention of the grant of the patent: **25.01.2017**
(21) Application number: 14157572.0
(22) Date of filing: 04.03.2014
(51) Int. Cl.: G06F 13/24

(54) **METHOD OF INTERRUPT CONTROL AND ELECTRONIC SYSTEM USING THE SAME**
UNTERBRECHUNGSSTEUERUNGSVERFAHREN UND ELEKTRONISCHES SYSTEM DAMIT
PROCÉDÉ DE COMMANDE D'INTERRUPTION ET SYSTÈME ÉLECTRONIQUE L'UTILISANT

(30) Priority: 29.04.2013 US 201361817306 P; 23.09.2013 CN 201310444355
(43) Date of publication of application: 05.11.2014
(73) Proprietor: Dyna Image Corporation, New Taipei City 231 (TW)
(72) Inventor: Zhan, Peng-Han, 235 New Taipei City (TW)
(74) Representative: Becker Kurig Straus

(56) References cited:
- DE-A1- 2 146 377
- DE-A1-102007 023 893
- US-A1- 2012 265 471
- ANONYMOUS: 'SFH 7773 (IR-LED + Proximity Sensor + Ambient Light Sensor) Application note preliminary', [Online] 12 December 2011, XP055111379 Retrieved from the Internet: <URL:http://www.mouser.com/pdfdocs/OSRAM_SF H_7773_ES6_1_AppNote_v9_final.pdf> [retrieved on 2014-04-01]

## Description

With advancements in technology, various electronic devices such as mobile phones, GPS navigator systems, tablets, personal digital assistants (PDA) and laptops have become indispensable in our daily life. A standard electronic system comprises a core processor such as a central processing unit (CPU), a microprocessor or a micro control unit (MCU). The core processor is utilized for managing and coordinating operations of every device in the electronic system. Since most devices need the processor to perform data processing, the load of the processor is heavy. If the processor performance is poor or a large number of tasks suddenly arrive, the processor may not be able to accomplish all tasks in time, resulting in a bottleneck of system performance.

The industry has made a lot of effort to enhance the performance of electronic systems by developing more powerful processors as well as decreasing their load. If powerful dual-core or quad-core processors are utilized, costs will increase necessarily without a guarantee that the performance can be doubled or quadrupled. More methods to decrease the processor load have therefore been developed, of which one is the interrupt control method. In the interrupt control method, an interrupt signal is sent to the processor only when there is a task to be executed in a device. Upon receiving the interrupt signal, the processor allocates resources to execute said tasks. In such a situation, the processor may not need to keep detecting the operations of every device; instead, the processor only allocates resources to a specific device after receiving the interrupt signal from the device. The load of the processor will be significantly decreased. Current methods of sending interrupt signals, however, cannot effectively and accurately send interrupt signals when a task needs to be executed in the device.

DE 102007023893 A1 discloses an interrupt controller (5) having a comparator to compare input signals (M1,M2,M3,M4) with stored threshold values. A memory unit stores configuration data which contains threshold values. The interrupt generator gives an interrupt instruction (IRQ) in dependence of a comparison accomplished in a mode. The upper threshold value, lower threshold value and the mode are programmable. Independent claims are also included for the following: (1) a sensor module (2) a method for programming interrupt controller.

Thus, there is a need for improvement over the prior art.

### Summary of the Invention

The present invention aims at providing a method of interrupt control and an electronic system using the same in order to solve the abovementioned problems.

This is achieved by a method of interrupt control and a control unit for an electronic system according to claims 1 and 7.

The dependent claims pertain to corresponding further developments and improvements.

As will be seen more clearly from the detailed description following below, the claimed interrupt control method is used for a control unit of an electronic system wherein the electronic system comprises a host and an electronic device. The claimed interrupt control method comprises receiving digital data generated by the electronic device; determining a value of the digital data; and sending interrupt signals to the host by the following methods according to the value of the digital data: when the control unit is in a signal sending status and after the value of the digital data increases to be greater than a threshold value and remains greater than the threshold value for a specific period of time, the control unit is switched to another signal sending status; and when the control unit is in the other signal sending status and after the value of the digital data decreases to be smaller than another threshold value and remains smaller than the other threshold value for another specific period of time, the control unit is switched to the signal sending status; wherein the other threshold value is smaller than the threshold value.

### Brief Description of the Drawings

FIG. 1 is a schematic diagram of a common interrupt signal sending status.
FIG. 2 is a schematic diagram of an electronic system according to an embodiment of the present invention.
FIG. 3 is a schematic diagram of an interrupt signal sending status according to an embodiment of the present invention.
FIG. 4 is a schematic diagram of an interrupt signal sending process according to an embodiment of the present invention.

### Detailed Description

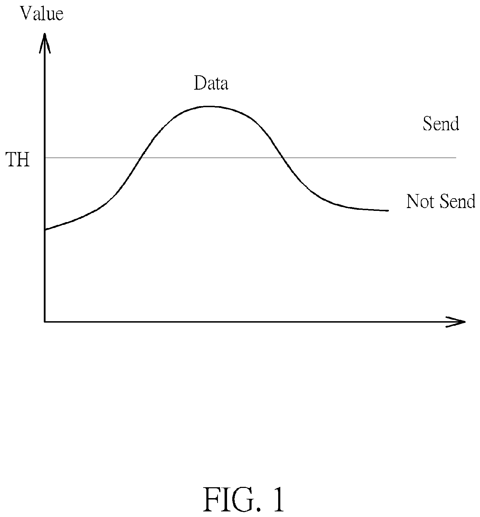

As mentioned above, current methods of sending interrupt signals cannot effectively and accurately send the interrupt signals when a task needs to be executed in the device. FIG. 1 is a schematic diagram of a common interrupt signal sending status. As shown in FIG. 1, a device may determine whether to send interrupt signals according to a value of data. When the value of the data is greater than a threshold value TH, the device may continue to send interrupt signals to inform the processor to execute the task. When the value of the data is smaller than the threshold value TH, the device may stop sending the interrupt signals, so the processor does not need to waste resources on detecting whether there are any tasks to be executed. In this interrupt signal sending policy, when the value of the data is close to the threshold value TH, noise in the system may cause the device to inaccurately send interrupt signals; alternatively, an interrupt signal needs to be sent but is not sent due to this noise interference.

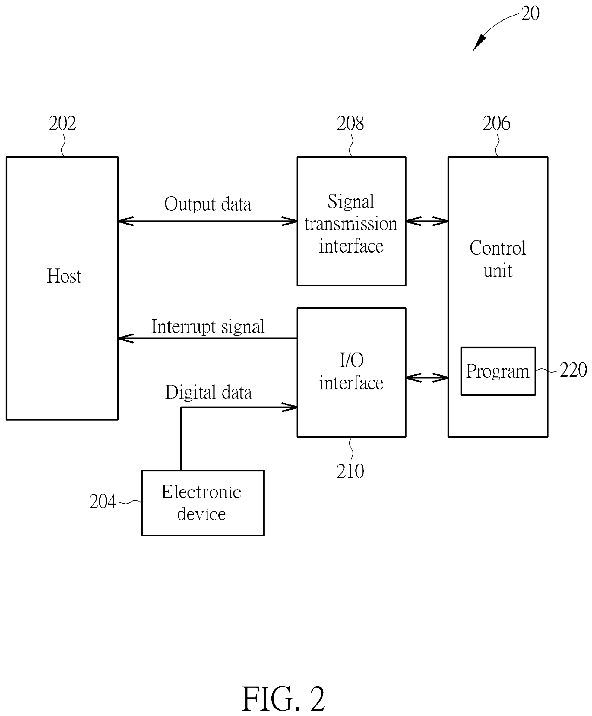

FIG. 2 is a schematic diagram of an electronic system 20 according to an embodiment of the present invention. The electronic system 20 includes a host 202, an electronic device 204, a control unit 206, a signal transmission interface 208 and an I/O interface 210. The host 202 is utilized for controlling operations of each device in the electronic system 20. In general, the host 202 may be a core processor of the electronic system 20 such as a central processing unit (CPU), a microprocessor or a micro control unit (MCU). The electronic device 204, which is a device capable of executing specific functions, is controlled by the host 202. When the electronic device 204 is operating, digital data may be generated, and these digital data may be converted into output data to be transmitted to the host 202 for follow-up processing. The control unit 206 is utilized for receiving the digital data generated by the electronic device 204 via the I/O interface 210. The control unit 206 may convert these digital data into the output data, which are then transmitted to the host 202 via the signal transmitting interface 208. The control unit 206 further sends the interrupt signals to the host 202 via the I/O interface 210. When the host 202 receives the interrupt signals, the host 202 may interrupt ongoing tasks and allocate resources to receive the output data.

It is notable that the abovementioned signal transmitting interface 208 and I/O interface 210 are utilized for performing connections and signal transmissions between each device. The implementation illustrated in FIG. 2 is only one of various embodiments. For example, the signal transmitting interface 208 and the I/O interface 210 may be realized in the electronic system 20 separately. The signal transmitting interface 208 and the I/O interface 210 may also be integrated into the control unit 206, or integrated into the host 202. The electronic system 20 may also use a transmission interface to integrate the functions of both the signal transmitting interface 208 and the I/O interface 210. In other words, the control unit 206 may be connected with other devices and signals may be transmitted via other interfaces or by other methods, which are not limited to what is described herein.

In detail, the control unit 206 may have a program 220, which is executed by a processor inside the control unit 206, in order to perform an interrupt control method. The interrupt control method of the present invention can be utilized for controlling the timing of sending the interrupt signals and preventing the interrupt signals from being sent inaccurately due to noise interference, so that the host 202 can efficiently obtain the output data of the electronic device 204. This further decreases the load of the host 202 and enhances the efficiency of the host 202.

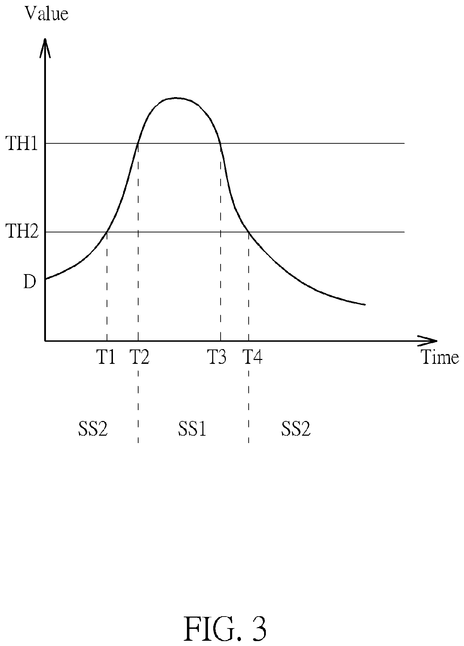

FIG. 3 is a schematic diagram of an interrupt signal sending status according to an embodiment of the present invention. As shown in FIG. 3, the control unit 206 defines a threshold value TH1 and a threshold value TH2, where the threshold value TH2 is smaller than the threshold value TH1. The control unit 206 receives digital data D generated by the electronic device 204, and determines the value of the digital data D. The control unit 206 then compares the value of the digital data D with the threshold value TH1 and the threshold value TH2, in order to determine whether the control unit 206 is in signal sending statuses SS1 or SS2.

In an embodiment, in the signal sending status SS1, the control unit 206 may continue to send the interrupt signals to the host 202, in order to notify the host to access the output data corresponding to the digital data D. In the signal sending status SS2, the control unit 206 may not send the interrupt signals to the host 202, so that the host 202 may allocate resources to other devices and does not need to waste resources on detecting whether there is a task to be processed in the electronic device 204. Initially, the control unit 206 may be predefined to be in the signal sending status SS2 and may not send the interrupt signals, as shown in FIG. 3. At this moment, if the value of the digital data D is smaller than the threshold value TH1, the control unit 206 is still in the signal sending status SS2 and may not send the interrupt signals. Even if the digital data D increases to be greater than the threshold value TH2 (e.g. at time T1), the control unit 206 will not change its status. When the digital data D increases to be greater than the threshold value TH1 (e.g. time T2), the control unit 206 may be switched to the signal sending status SS1 and start to send the interrupt signals to the host 202. Since the control unit 206 starts to send the interrupt signals after the digital data D rises to the higher threshold value TH1, it is harder for the digital data D to trigger the control unit 206 to the signal sending status SS1 when noise causes signal fluctuations, so that inaccurate sending of the interrupt signals may be decreased.

When the value of the digital data D remains greater than the threshold value TH1, the control unit 206 remains in the signal sending status SS1 and therefore continues to send the interrupt signals to the host 202. When the value of the digital data D decreases to be smaller than the threshold value TH1 (e.g. time T3), the digital data D is still greater than the threshold value TH2, so that the control unit 206 is still in the signal sending status SS1 and continues to send the interrupt signals. When the digital data D keeps decreasing and falls to be smaller than the threshold value TH2 (e.g. time T4), the control unit 206 may be switched to the signal sending status SS2 and thereby stop sending the interrupt signals to the host 202. Since the control unit 206 changes status after the digital data D falls to the lower threshold value TH2, it is harder for the digital data D to trigger the control unit 206 to the signal sending status SS2 when noise causes signal fluctuations, so that the possibility that the control unit 206 has to send the interrupt signals but does not send them may be decreased.

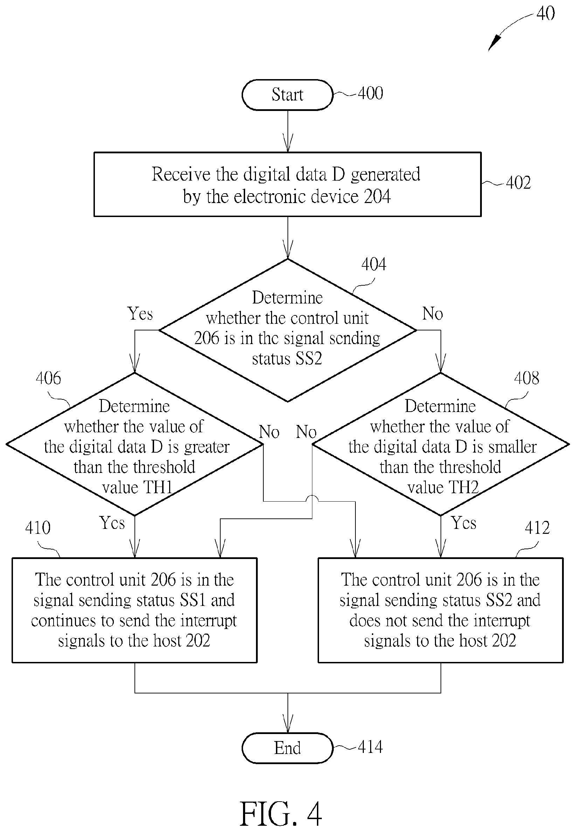

The above operations related to the method of sending interrupt signals can be summarized into an interrupt signal sending process 40, as shown in FIG. 4. The interrupt signal sending process 40, which can be compiled into the program 220 to be executed by the processor in the control unit 206, includes the following steps:
- Step 400:: Start.
- Step 402:: Receive the digital data D generated by the electronic device 204.
- Step 404:: Determine whether the control unit 206 is in the signal sending status SS2. If yes, go to Step 406; otherwise, go to Step 408.
- Step 406:: Determine whether the value of the digital data D is greater than the threshold value TH1. If yes, go to Step 410; otherwise, go to Step 412.
- Step 408:: Determine whether the value of the digital data D is smaller than the threshold value TH2. If yes, go to Step 412; otherwise, go to Step 410.
- Step 410:: The control unit 206 is in the signal sending status SS1 and continues to send the interrupt signals to the host 202.
- Step 412:: The control unit 206 is in the signal sending status SS2 and does not send the interrupt signals to the host 202.
- Step 414:: End.

In the interrupt signal sending process 40, the determinations of sending the interrupt signals can be simplified to the following methods: when the control unit 206 is in the signal sending status SS2, only determine whether the value of the digital data D is greater than the threshold value TH1. When the value of the digital data D is determined to be greater than the threshold value TH1, the control unit 206 is then switched to the signal sending status SS1. When the control unit 206 is in the signal sending status SS1, only determine whether the value of the digital data D is smaller than the threshold value TH2. When the value of the digital data D is determined to be smaller than the threshold value TH2, the control unit 206 is then switched to the signal sending status SS2.

In another embodiment, the control unit 206 is switched to the signal sending status SS1 after the value of the digital data D rises to be greater than the threshold value TH1 and further remains greater than the threshold value TH1 for a period of time, in order to prevent the control unit 206 from inaccurately sending the interrupt signals due to noise interference. The value of the digital data D has to remain above the threshold value TH1 for a specific period of time before the control unit 206 changes to the signal sending status SS1 and starts to send the interrupt signals to the host 202. The specific period of time may be, but should not be limited to, any length of time determined according to system requirements. In such a situation, after the value of the digital data D rises and exceeds the threshold value TH1, if the value of the digital data D falls below the threshold value TH1 within the specific period of time. Such rising and falling may be considered as fluctuations caused by noise interference, and the control unit 206 may not be triggered to change status. At this moment, the control unit 206 may still remain in the signal sending status SS2 and may not send the interrupt signals to the host 202.

Similarly, the control unit 206 is switched to the signal sending status SS2 after the value of the digital data D falls to be smaller than the threshold value TH2 and remains smaller than the threshold value TH2 for a period of time. The value of the digital data D has to remain below the threshold value TH2 for a specific period of time before the control unit 206 is switched to the signal sending status SS2 and stops sending the interrupt signals to the host 202. The length of the specific period of time described herein may be the same as or different from the length of the abovementioned period for determining whether to switch the control unit 206 to the signal sending status SS1, which may be determined according to system requirements. In such a situation, after the value of the digital data D falls to be smaller than the threshold value TH2, if the value of the digital data D returns to be greater than the threshold value TH2 within the specific period of time. Such rising and falling may be considered as fluctuations caused by noise interference, and the control unit 206 may not be triggered to change status. At this moment, the control unit 206 may still remain in the signal sending status SS1 and may keep sending the interrupt signals to the host 202.

It is notable that the control unit of the present invention is capable of accurately sending the interrupt signals to the host and preventing the noise interference from causing the interrupt signals to be sent inaccurately. Those skilled in the art can make modifications and alternations accordingly. For example, the magnitudes of the threshold value TH1 and the threshold value TH2 may be defined to be a suitable value according to system requirements, which allows the control unit 206 to accurately change status. The electronic device 204 may be any devices in the electronic system 20 that can be controlled by the host 202, which should not be limited to particular types or those devices which have particular functions. In other words, any peripheral devices managed by the host 202 may utilize the abovementioned methods of sending interrupt signals to prevent noise interference from causing the signals to be sent inaccurately. Therefore, the host 202 may not need to keep detecting operations of every device; instead, the host 202 may allocate resources to process tasks in the specific device only when receiving the interrupt signals.

For example, in an embodiment, the electronic device 204 may be a light sensor, and the digital data may be related to a sensing result of ambient lights. The host 202 may not need to keep receiving the data sensed by the light sensor; instead, after the light sensor obtains the sensing result, the sensing result is transmitted to the control unit 206. The control unit 206 then determines when to start sending the interrupt signals according to the value of the sensing result, e.g. defining an effective sensing result to be a value greater than the threshold value TH1 and remaining above the threshold value TH1 for a period of time. When the effective sensing result is detected, the control unit 206 may start to send the interrupt signals to the host 202, in order to notify the host 202 to receive data.

In the above embodiment, in the signal sending status SS1, the control unit 206 may continue to send the interrupt signals to the host 202, in order to notify the host 202 to access the output data corresponding to the digital data D. In the signal sending status SS2, the control unit 206 may not send the interrupt signals to the host 202, so that the host 202 may allocate resources to other devices, wherein no resources are wasted in detecting whether there is a task to be processed in the electronic device 204. In another embodiment, the control unit 206 may be controlled to continue to send the interrupt signals to the host 202 in the signal sending status SS2 to notify the host 202 to access the output data corresponding to the digital data D, while the control unit 206 may not send the interrupt signals to the host 202 in the signal sending status SS1, so that the host 202 may allocate resources to other devices. In this way, no resources are wasted in detecting whether there is a task to be processed in the electronic device 204.

The methods of switching between the signal sending statuses SS1 and SS2 are still the same as the method shown in FIG. 3, wherein the control unit 206 does not send the interrupt signals in the signal sending status SS1 and continues to send the interrupt signals to the host 202 in the signal sending status SS2. Such setting of interrupt signal sending may also be incorporated with the abovementioned methods that require a status to be constant for a specific period of time. For example, if the control unit 206 is in the signal sending status SS2, the control unit 206 may be switched to the signal sending status SS1 and stop sending the interrupt signals only after the value of the digital data D remains above the threshold value TH1 for a specific period of time. If the control unit 206 is in the signal sending status SS1, the control unit 206 may be switched to the signal sending status SS2 and start to send the interrupt signals to the host 202 only after the value of the digital data D remains below the threshold value TH2 for a specific period of time. As a result, the conditions that the interrupt signals are sent inaccurately or that the interrupt signals which should be sent but are not sent due to noise interference may be prevented.

The above signal sending methods switch between two signal sending statuses, wherein the interrupt signals are sent continuously in one of the statuses and are not sent in the other one. In another embodiment, the methods of sending interrupt signals related to the two signal sending statuses may also be performed by other methods, which are not limited to what is described herein. For example, for a specific type of electronic device, the control unit 206 may not need to keep sending the interrupt signals; instead, the control unit 206 sends an interrupt signal when changing status. In detail, the control unit 206 may send an interrupt signal to the host 202, in order to notify the host 202 to access the output data corresponding to the digital data D when the control unit 206 is switched from the signal sending status SS2 to the signal sending status SS1. The control unit 206 may also send an interrupt signal to the host 202 to notify the host 202 to access the output data corresponding to the digital data D when switching from the signal sending status SS1 to the signal sending status SS2. In this embodiment, the methods of switching between the signal sending statuses SS1 and SS2 are still the same as the method shown in FIG. 3, but the control unit 206 only sends an interrupt signal when changing status instead of continuing to send interrupt signals.

It is notable that since the host 202 allocates resources to access the output data of the electronic device 204 only when necessary, the sending of the interrupt signals may be adjusted according to different types of electronic devices or different types of output data, which should be determined according to system requirements.

In the prior art, conventional methods of sending interrupt signals cannot effectively and accurately send interrupt signals when a task needs to be executed in the device. If noise occurs, the noise may cause the device to inaccurately send interrupt signals, or an interrupt signal may need to be sent but is not sent due to the noise interference. In comparison, the interrupt control method and electronic system of the present invention determines the timing of sending interrupt signals with two threshold values. This is able to effectively and accurately send the interrupt signals so that efficiency of the host is enhanced.

## Claims

1. An interrupt control method for a control unit (206) of an electronic system (20), the electronic system (20) comprising a host (202) and an electronic device (204), the interrupt control method comprising the following steps carried out by the control unit (206):
receiving digital data (D) generated by the electronic device (204);
determining a value of the digital data (D); and
sending interrupt signals to the host (202) by one of the following methods according to the value of the digital data (D):
switching the control unit (206) to another signal sending status when the control unit (206) is in a signal sending status and after the value of the digital data (D) increases to be greater than a threshold value (TH1) and remains greater than the threshold value (TH1) for a specific period of time; and/or
switching the control unit (206) to the signal sending status when the control unit (206) is in the other signal sending status and after the value of the digital data (D) decreases to be smaller than another threshold value (TH2) and remains smaller than the other threshold value (TH2) for another specific period of time;
wherein the other threshold value (TH2) is smaller than the threshold value (TH1); **characterized in that** the interrupt signals are continuously sent to the host (202) when the control unit (206) is in the other signal sending status and no interrupt signals are sent to the host (202) when the control unit (206) is in the signal sending status, or the interrupt signals are continuously sent to the host (202) when the control unit (206) is in the signal sending status and no interrupt signals are sent to the host (202) when the control unit (206) is in the other signal sending status;
wherein the signal sending status and the other signal sending status are configured based on regions defined by the threshold values (TH1, TH2).

2. The method of claim 1, **characterized by** sending an interrupt signal to the host (202) when the control unit (206) is switched from the signal sending status to the other signal sending status, and sending another interrupt signal to the host (202) when the control unit (206) is switched from the other signal sending status to the signal sending status.

3. The method of any one of claims 1-2, **characterized in that** the interrupt signals control the host (202) to interrupt an ongoing task in order to allow the host (202) to receive an output data corresponding to the digital data (D).

4. The method of any one of claims 1-3, **characterized in that** the electronic device (204) is a light sensor, and the digital data (D) correspond to a sensing result of ambient lights.

5. The method of any of claims 1-4, **characterized by** not switching the control unit (206) to the signal sending status when the control unit (206) is in the other signal sending status and the value of the digital data (D) decreases to be smaller than the threshold value (TH1) but is greater than the other threshold value (TH2).

6. The method of any of claims 1-5, **characterized by** not switching the control unit (206) to the other signal sending status when the control unit (206) is in the signal sending status and the value of the digital data (D) increases to be greater than the other threshold value (TH2) but is smaller than the threshold value (TH1).

7. A control unit (206) capable of carrying out any of the interrupt control methods according to any one of claims 1-6.

8. An electronic system (20) comprising the control unit (206) according to claim 7.

## Patentansprüche

1. Unterbrechungsverfahren für eine Steuereinheit (206) eines elektronischen Systems (20), das elektronische System (20) umfasst einen Host (202) und eine elektronische Vorrichtung (204), wobei das Unterbrechungsverfahren die folgenden Schritte umfasst, die von der Steuereinheit (206) ausgeführt werden:
Erhalten digitaler Daten (D), die von der elektronischen Vorrichtung (204) erzeugt werden;
Bestimmen eines Wertes der digitalen Daten (D); und
Senden von Unterbrechungssignalen an den Host (202) durch eines der folgenden Verfahren gemäß dem Wert der digitalen Daten (D):
Umschalten der Steuereinheit (206) in einen anderen Signalsendezustand, wenn sich die Steuereinheit (206) in einem Signalsendezustand befindet und sich der Wert der digitalen Daten (D) so erhöht, dass er größer als ein Schwellenwert (TH1) ist und größer als der Schwellenwert (TH1) für eine bestimmte Dauer bleibt; und/oder
Umschalten der Steuereinheit (206) in den Signalsendezustand, wenn sich die Steuereinheit (206) in dem anderen Signalsendezustand befindet und sich der Wert der digitalen Daten (D) so verringert, dass er niedriger als ein anderer Schwellenwert (TH2) ist und kleiner als der andere Schwellenwert (TH2) für eine andere bestimmte Dauer bleibt;
wobei der andere Schwellenwert (TH2) kleiner als der Schwellenwert (TH1) ist; **dadurch gekennzeichnet, dass** die Unterbrechungssignale kontinuierlich an den Host (202) gesendet werden, wenn sich die Steuereinheit (206) in dem anderen Signalsendezustand befindet, und es werden keine Unterbrechungssignale an den Host (202) gesendet, wenn sich die Steuereinheit (206) in dem Signalsendezustand befindet, oder die Unterbrechungssignale werden kontinuierlich an den Host (202) gesendet, wenn sich die Steuereinheit (206) in dem Signalsendezustand befindet, und es werden keine Unterbrechungssignale an den Host (202) gesendet, wenn sich die Steuereinheit (206) in dem anderen Signalsendezustand befindet;
wobei der Signalsendezustand und der andere Signalsendezustand basierend auf Regionen konfiguriert sind, die durch die Schwellenwerte (TH1, TH2) definiert werden.

2. Verfahren nach Anspruch 1, **gekennzeichnet durch** ein Senden eines Unterbrechungssignals an den Host (202), wenn die Steuereinheit (206) von einem Signalsendezustand in den anderen Signalsendezustand umgeschaltet wird, und **durch** Senden eines anderen Unterbrechungssignals an den Host (202), wenn die Steuereinheit (206) von dem anderen Signalsendezustand in den Signalsendezustand umgeschaltet wird.

3. Verfahren nach einem der Ansprüche 1-2, **dadurch gekennzeichnet, dass** die Unterbrechungssignale den Host (202) steuern, eine laufende Aufgabe zu unterbrechen, um es dem Host (202) zu ermöglichen, Datenausgaben entsprechend den digitalen Daten (D) zu empfangen.

4. Verfahren nach einem der Ansprüche 1-3, **dadurch gekennzeichnet, dass** die elektronische Vorrichtung (204) ein Lichtsensor ist, und die digitalen Daten (D) einem Erfassungsergebnis von Umgebungslicht entsprechen.

5. Verfahren nach einem der Ansprüche 1-4, **gekennzeichnet durch** ein Nichtumschalten der Steuereinheit (206) in den Signalsendezustand, wenn sich die Steuereinheit (206) in dem anderen Signalsendezustand befindet und sich der Wert der digitalen Daten (D) auf einen Wert verringert, der kleiner als der Schwellenwert (TH1) ist aber größer als der andere Schwellenwert (TH2).

6. Verfahren nach einem der Ansprüche 1-5, **gekennzeichnet durch** ein Nichtumschalten der Steuereinheit (206) in den anderen Signalsendezustand, wenn sich die Steuereinheit (206) in dem Signalsendezustand befindet und sich der Wert der digitalen Daten (D) auf einen Wert erhöht, der größer als der andere Schwellenwert (TH2) ist aber kleiner als der Schwellenwert (TH1).

7. Steuereinheit (206), die fähig ist, eines der Unterbrechungsverfahren nach einem der Ansprüche 1-6 auszuführen.

8. Elektronisches System (20) umfassend die Steuereinheit (206) nach Anspruch 7.

## Revendications

1. Procédé de commande d'interruption pour une unité de commande (206) d'un système électronique (20), le système électronique (20) comprenant un hôte (202) et un dispositif électronique (204), le procédé de commande d'interruption comprenant les étapes suivantes effectuées par l'unité de commande (206) :
réception de données numériques (D) générées par le dispositif électronique (204) ;
détermination d'une valeur des données numériques (D) ; et
envoi de signaux d'interruption à l'hôte (202) par l'un des procédés suivants selon la valeur des données numériques (D) :
commutation de l'unité de commande (206) sur un autre état d'envoi de signal lorsque l'unité de commande (206) se trouve dans un état d'envoi de signal et après que la valeur des données numériques (D) augmente pour être supérieure à une valeur seuil (TH1) et demeure supérieure à la valeur seuil (TH1) pendant une période spécifique de temps ; et/ou
commutation de l'unité de commande (206) sur l'état d'envoi de signal lorsque l'unité de commande (206) se trouve dans l'autre état d'envoi de signal et après que la valeur des données numériques (D) diminue pour être plus petite qu'une autre valeur seuil (TH2) et demeure plus petite que l'autre valeur seuil (TH2) pendant une autre période spécifique de temps ;
dans lequel l'autre valeur seuil (TH2) est plus petite que la valeur seuil (TH1) ; **caractérisé en ce que** les signaux d'interruption sont envoyés de façon continue à l'hôte (202) lorsque l'unité de commande (206) se trouve dans l'autre état d'envoi de signal et aucun signal d'interruption n'est envoyé à l'hôte (202) lorsque l'unité de commande (206) se trouve dans l'état d'envoi de signal, ou les signaux d'interruption sont envoyés de façon continue à l'hôte (202) lorsque l'unité de commande (206) se trouve dans l'état d'envoi de signal et aucun signal d'interruption n'est envoyé à l'hôte (202) lorsque l'unité de commande (206) se trouve dans l'autre état d'envoi de signal ;
dans lequel l'état d'envoi de signal et l'autre état d'envoi de signal sont configurés sur la base de régions définies par les valeurs seuils (TH1, TH2).

2. Procédé selon la revendication 1, **caractérisé par** l'envoi d'un signal d'interruption à l'hôte (202) lorsque l'unité de commande (206) est commutée de l'état d'envoi de signal à l'autre état d'envoi de signal, et l'envoi d'un autre signal d'interruption à l'hôte (202) lorsque l'unité de commande (206) est commutée de l'autre état d'envoi de signal à l'état d'envoi de signal.

3. Procédé selon l'une quelconque des revendications 1 à 2, **caractérisé en ce que** les signaux d'interruption commandent l'hôte (202) pour interrompre une tâche en cours afin de permettre à l'hôte (202) de recevoir des données de sortie correspondant aux données numériques (D).

4. Procédé selon l'une quelconque des revendications 1 à 3, **caractérisé en ce que** le dispositif électronique (204) est un capteur de lumière, et les données numériques (D) correspondent à un résultat de détection de lumières ambiantes.

5. Procédé selon l'une quelconque des revendications 1 à 4, **caractérisé par** la non-commutation de l'unité de commande (206) sur l'état d'envoi de signal lorsque l'unité de commande (206) se trouve dans l'autre état d'envoi de signal et que la valeur des données numériques (D) diminue pour être plus petite que la valeur seuil (TH1), mais est supérieure à l'autre valeur seuil (TH2).

6. Procédé selon l'une quelconque des revendications 1 à 5, **caractérisé par** la non-commutation de l'unité de commande (206) sur l'autre état d'envoi de signal lorsque l'unité de commande (206) se trouve dans l'état d'envoi de signal et que la valeur des données numériques (D) augmente pour être supérieure à l'autre valeur seuil (TH2), mais est plus petite que la valeur seuil (TH1).

7. Unité de commande (206) capable d'effectuer l'un quelconque des procédés de commande d'interruption selon l'une quelconque des revendications 1 à 6.

8. Système électronique (20) comprenant l'unité de commande (206) selon la revendication 7.
